# EUROPEAN PATENT APPLICATION

(11) **EP 4 800 442 A1**
(43) Date of publication of application: **02.09.2026**
(21) Application number: 26157836.3
(22) Date of filing: 11.02.2026
(51) Int. Cl.: G02B 5/122, G02B 5/124, G02B 27/14, G02B 30/56, G02B 30/60

(54) **OPTICAL ELEMENT AND DISPLAY DEVICE**

(30) Priority: 26.02.2025 JP 2025028590
(71) Applicant: Alps Alpine Co., Ltd., Ota-ku, Tokyo 145-8501 (JP)
(72) Inventor: Ashimine, Katsunari, Iwaki-city Fukushima (JP)
(74) Representative: Schmitt-Nilson Schraud Waibel Wohlfrom Patentanwälte Partnerschaft mbB

(57) **Abstract**

A display device configured to be capable of displaying an aerial image by using retroreflection includes: a light source; a retroreflective member; and an optical element disposed at a position where light from the light source is incident, in which the optical element includes: a plurality of reflective members formed using a plurality of slits; and a decorative layer disposed on a first reflective surface of each of the plurality of the reflective members, the first reflective surface being opposite to a second reflective surface of each of the plurality of the reflective members, the second reflective surface of each of the plurality of the reflective members reflects the light from the light source toward the retroreflective member, the first reflective surface reflects external light incident via the decorative layer, and the plurality of the slits transmit light retroreflected by the retroreflective member to form the aerial image.

## Description

This application is based upon and claims priority to Japanese Patent Application No. 2025-028590 filed on February 26, 2025.

The disclosure relates to a display device for displaying an aerial image by retroreflection, and more particularly to an optical element for forming such an aerial image.

Aerial imaging by retroreflection (AIRR) is known. The principle of aerial imaging using retroreflection is that light emitted from a light source is reflected by a mirror toward a retroreflective member, and the light retroreflected back toward the mirror is partially transmitted through the mirror to form an aerial image. Accordingly, a half mirror with a reduced reflectance, a polarizing beam splitter, or the like is used as the mirror (see, for example, Japanese Patent No. 7604079). Moreover, a decorative sheet is disposed between the imaging element and the aerial-image formation position so that the inside cannot be seen from the outside (see, for example, Japanese Patent Application Laid-Open Patent Publication No. 2020-076811).

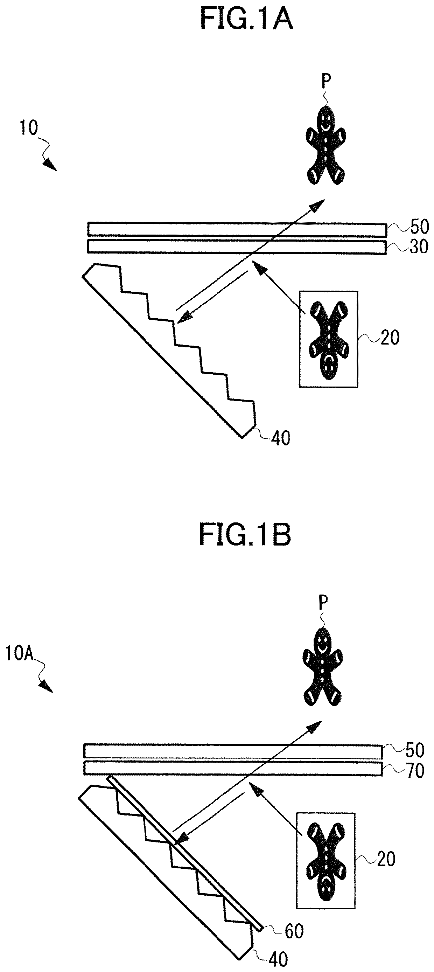

FIG. 1A is a schematic diagram illustrating a configuration of a display device that displays an aerial image in the related art. The display device 10 includes, for example, a display 20, a half mirror 30, a retroreflective member 40, and a decorative layer 50 that is provided above the half mirror 30, all accommodated inside a housing such as a casing.

The display 20 outputs an original image used for an aerial image P, and the half mirror 30 partially reflects incident light corresponding to the original image toward the retroreflective member 40. The retroreflective member 40 reflects the incident light back in the same direction from which the incident light comes from, and the reflected light passes through the half mirror 30 and the decorative layer 50 to form the aerial image P. The decorative layer 50 is a decorative film or decorative sheet on which a design is printed, and is a transparent medium having a certain transmittance. By providing the decorative layer 50 above the half mirror 30, the inside of the housing is not visible from the outside, and the exterior design is improved.

In a case of using the half mirror 30, for example, if the half mirror 30 reflects 50% of light, the light is reflected and transmitted so that the light passes through the half mirror 30 twice, resulting in optical loss and reduced efficiency of the light contributing to the formation of the aerial image P. To improve optical efficiency, a display device 10A illustrated in FIG. 1B employs a polarizing beam splitter 70 instead of the half mirror 30, and a quarter-wave plate 60 that introduces a quarter-wave phase difference is disposed above the retroreflective member 40. In this case, the polarizing beam splitter 70 reflects the light corresponding to the original image incident from the display 20 toward the quarter-wave plate 60 and the retroreflective member 40. The polarizing beam splitter 70 then aligns the polarization direction of the light emitted from the quarter-wave plate 60 with the transmission axis of the polarizing beam splitter 70, so that the light transmitted through the polarizing beam splitter 70 and the decorative layer 50 forms the aerial image P.

However, in the display devices 10 and 10A of the related art illustrated in FIGS. 1A and 1B, the light retroreflected by the retroreflective member 40 is transmitted through the half mirror 30 or the polarizing beam splitter 70, and then through the decorative layer 50. This inevitably causes optical loss due to the decorative layer 50, and reduces the brightness of the aerial image.

The disclosure relates to a display device and optical element according to the appended claims. Embodiments are disclosed in the dependent claims.

A display device according to an aspect includes a display device configured to be capable of displaying an aerial image by using retroreflection and includes: a light source; a retroreflective member; and an optical element disposed at a position where light from the light source is incident, in which the optical element includes: a plurality of reflective members formed using a plurality of slits; and a decorative layer disposed on a first reflective surface of each of the plurality of the reflective members, the first reflective surface being opposite to a second reflective surface of each of the plurality of the reflective members, the second reflective surface of each of the plurality of the reflective members reflects the light from the light source toward the retroreflective member, the first reflective surface reflects external light incident via the decorative layer, and the plurality of the slits transmit light retroreflected by the retroreflective member to form the aerial image.

An optical element according to an aspect includes an optical element configured to form an aerial image by using retroreflection and includes: a transparent base; a plurality of reflective members formed at a surface of the transparent base by using a plurality of slits; and a decorative layer formed between the surface of the transparent base and the plurality of the reflective members.
FIG. 1A is a schematic diagram illustrating a configuration of a display device that displays an aerial image in the related art;
FIG. 1B is a schematic diagram illustrating a configuration of a display device that displays an aerial image in the related art;
FIG. 2A is a schematic diagram illustrating a configuration of a display device according to an embodiment;
FIG. 2B is a bottom view of a slit mirror illustrated in FIG. 2A;
FIG. 2C is a cross-sectional view of the slit mirror illustrated in FIG. 2B taken along a line A-A;
FIG. 3A is a diagram for explaining the principle of the display device according to an embodiment;
FIG. 3B is a diagram for explaining reflection and transmission by the slit mirror;
FIG. 4A is a diagram illustrating an example of optical efficiency in the display device in the related art;
FIG. 4B is a diagram illustrating an example of optical efficiency in the display device according to an embodiment;
FIG. 5A is a diagram for explaining a further improvement of the display device illustrated in FIG. 2A; and
FIG. 5B is a schematic diagram illustrating a configuration of a display device according to another embodiment.

An object of the disclosure is to overcome the challenge in the related art and to provide an optical element and a display device which reduce optical loss caused by a decorative layer.

Next, embodiments of the disclosure will be described. In embodiments, a display device employs a slit mirror structure as an optical element for forming an aerial image, in which a plurality of reflective members are formed in a stripe pattern using a plurality of slits. By employing the slit mirror structure, optical efficiency can be improved and chromatic dispersion can be suppressed when compared with a half mirror or a polarizing beam splitter, which is used in the related art. It should be noted that the drawings referred to in the following description of the embodiments may be emphasized to facilitate understanding of the invention and do not re the actual shape or scale of a product.

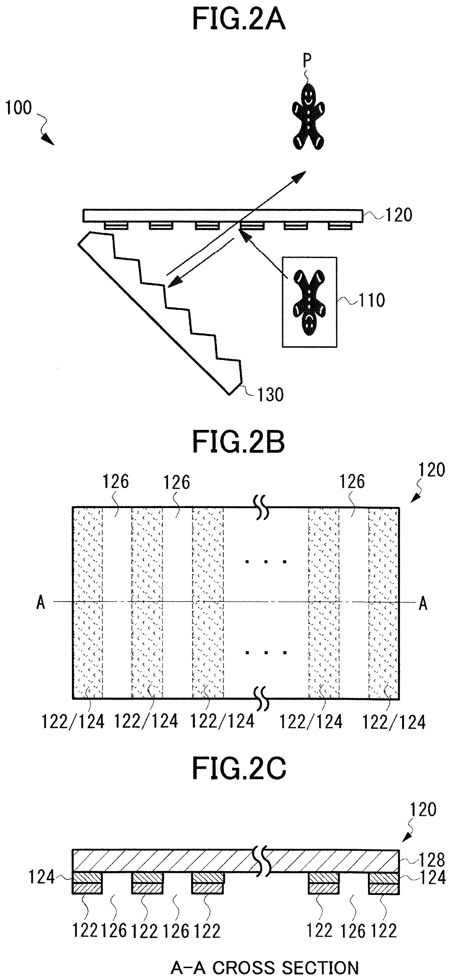

Next, embodiments of the disclosure will be described in detail. FIG. 2A is a schematic diagram illustrating a configuration of a display device according to a first embodiment. A display device 100 of the embodiment includes a display 110, a slit mirror 120 in which a plurality of mirrors are formed in a stripe pattern using slits, and a retroreflective member 130. These components are disposed in, for example, a housing or a casing, and an aerial image P is formed in midair above the housing.

The display 110 is a light source for generating an original image used for the aerial image P. The display 110 is not particularly limited, and may be, for example, a light-emitting diode (LED) display, an organic EL display, a projector, or an LED unit in which a plurality of LEDs are arranged two-dimensionally. Light corresponding to the original image used for the aerial image P generated by the display 110 is emitted toward the slit mirror 120. For example, an angle between a normal (optical axis) to a display surface of the display 110 and the main surface of the slit mirror 120 is 45 degrees.

The slit mirror 120 is an optical element in which a plurality of slits and a plurality of mirrors are alternately arranged. The slit mirror 120 is disposed at a position where light from the display 110 is incident, reflects the light from the display 110 toward the retroreflective member 130 using the plurality of mirrors, and transmits the light retroreflected by the retroreflective member 130 using the plurality of slits to form the aerial image P.

FIG. 2B is a bottom view of the slit mirror 120, and FIG. 2C is a cross-sectional view of the slit mirror 120 taken along a line A-A. As shown in these drawings, the slit mirror 120 has a substantially rectangular flat surface, and a plurality of long, thin and rectangular mirrors 122, a plurality of decorative layers 124, and a plurality of slits 126 are formed in the slit mirror 120. The mirrors 122 extend in a column direction. The decorative layers 124 are disposed on upper surfaces of the mirrors 122. Each of the slits 126 is formed between adjacent mirrors 122 (adjacent decorative layers 124). The decorative layers 124 have the same planar shape as the mirrors 122. Referring to FIGS. 2A to 2C, a lower surface of each mirror 122 serves as a reflective surface that reflects light incident from the display 110, and the upper surface of each mirror 122 serves as a reflective surface that reflects light incident from outside through the decorative layer 124. The decorative layers 124 provide a decorative appearance. Each slit 126 serves as a transmission region for the retroreflected light.

In a certain embodiment, as illustrated in FIG. 2C, a slit mirror 120 includes a transparent base 128 that is capable of transmitting light, such as a transparent film or plate. On a bottom surface of the transparent base 128, decorative layers 124 and mirrors 122 are formed in a stacked manner. The material of the transparent base 128 is not particularly limited, and may be, for example, plastic, glass, or acrylic.

Each mirror 122 is, for example, a metal layer. The decorative layers 124 are transparent layers having a certain transmittance and providing a design. The design provided by the decorative layers 24 enhances the external design of the display device 100, and the colors, patterns, and the like forming the design may be selected as desired.

The method for manufacturing the mirrors 122 and the decorative layers 124 is not particularly limited. For example, a metal layer serving as the mirror 122, on which the decorative layer 124 is printed, may be attached to the transparent base 128. Alternatively, the decorative layer may be formed on the entire surface of the transparent base 128, after which a metal material may be vapor-deposited so as to cover the entire surface of the decorative layer. Thereafter, these materials may be patterned by etching to form the striped mirrors 122 and the decorative layers 124. Regions of the transparent base 128 that are not covered by the metal layer serve as the slits 126, that is, transmissive regions. The above-described methods for manufacturing the mirrors 122 and the decorative layers 124 are merely examples, and the slit mirror 120 may be formed by other methods.

In another embodiment, each slit 126 may be a void or space formed in the transparent base 128. In still another embodiment, each decorative layer 124 may be formed on the top surface of the transparent base 128 so as to be aligned with the position of each mirror 122. That is, each mirror 122 is directly formed on the bottom surface of the transparent base 128, and each decorative layer 124 is formed on the top surface so as to be precisely aligned with the position of the corresponding mirror 122. In this case, the decorative layers 124 are printed on the top surface of the transparent base 128, and the mirrors 122 are printed on the bottom surface of the transparent base 128.

The retroreflective member 130 is an optical element that reflects incident light back in the same direction from which the incident light comes from, and the configuration of the retroreflective member 130 is not particularly limited. For example, the retroreflective member 130 may be configured as a triangular-pyramidal retroreflective element, a full cube-corner retroreflective element, or the like. The retroreflective member 130 receives the light reflected by the mirrors 122 of the slit mirror 120 and reflects the received light back in the same direction from which the received light comes from. The light retroreflected by the retroreflective member 130 travels parallel to the received light, and a certain offset occurs between the retroreflected light and the received light as described later. The retroreflective member 130 is aligned with the slit mirror 120 such that the retroreflected light passes through the slits 126 of the slit mirror 120. Accordingly, the aerial image P is formed by the retroreflected light transmitted through the slits 126 of the slit mirror 120.

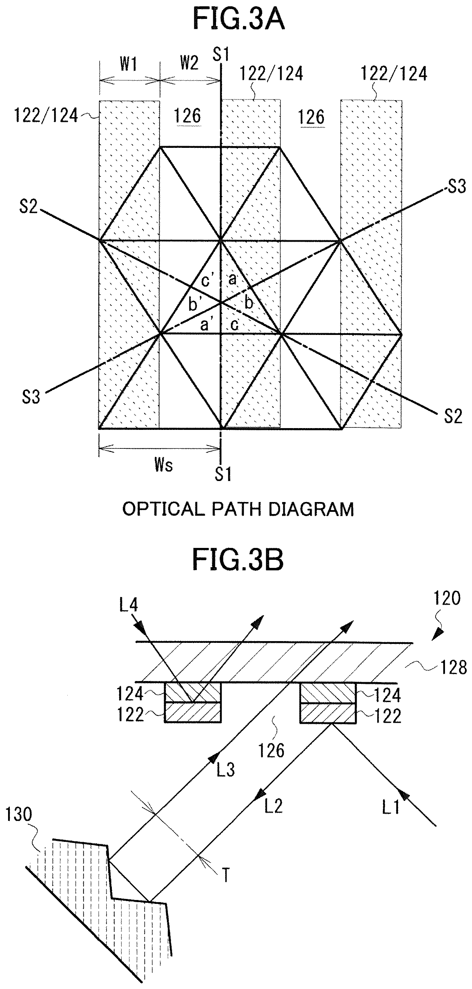

Next, the operating principle of the display device 100 of the embodiments will be described. FIG. 3A is an optical path diagram obtained by projecting the retroreflective member onto the slit mirror and viewing the two in an overlapped state. The retroreflective member 130 includes a plurality of retroreflective units arranged in a matrix pattern, and each retroreflective unit may be configured, for example, as a retroreflective prism. The retroreflective prism has three reflective surfaces, and incident light is internally reflected three times by the three reflective surfaces and emitted back in the same direction from which the incident light comes from. At this time, a certain amount of offset always occurs between the incident light and the emitted light (retroreflected light). The retroreflective member 130 has three axes of inversion symmetry (hereinafter referred to as "symmetry axes"), with respect to which outgoing light travels in a direction symmetric to the incident light.

For example, in the example illustrated in FIG. 3A, when one retroreflective unit is viewed from above, the retroreflective unit has the shape of an equilateral triangle. The plurality of retroreflective units are arranged in a matrix such that the equilateral-triangle units are alternately oriented in opposite directions. Three bisectors extending from the vertices of the equilateral triangles toward the midpoints of the opposite sides define symmetry axes S1, S2, and S3.

As illustrated in FIG. 3A, light incident on a of a retroreflective unit is emitted from a position a' that is symmetric with respect to the symmetry axis S2, light incident on b is emitted from a position b' that is symmetric with respect to the symmetry axis S1, and light incident on c is emitted from a position c' that is symmetric with respect to the symmetry axis S3. The same holds in the reverse direction: light incident on a' is emitted from a, light incident on b' is emitted from b, and light incident on c' is emitted from c. Thus, the light incident on the retroreflective units is emitted from the positions that are symmetric with respect to the symmetry axes S1, S2, and S3.

The retroreflective member 130 is positioned with respect to the slit mirror 120 such that one of the symmetry axes S1, S2, and S3 becomes parallel to the row direction (slit direction) of the mirrors 122. In the example in FIG. 3A, the retroreflective member 130 is disposed such that the symmetry axis S1 becomes parallel to the slit direction of the slit mirror 120.

In a preferred embodiment, each of the pitches of the mirrors 122 and of the slits 126 of the slit mirror 120 in the row direction is set to be equal to the pitch of the retroreflective units in the row direction. In this case, a width W1 of each mirror 122 in the row direction is equal to a width W2 of each slit 126 in the row direction (W1 = W2), and a length Ws of one side of the equilateral triangle of each retroreflective unit is defined as Ws = W1 + W2. A width of each decorative layer 124 in the row direction is equal to the width W1 of each mirror 122.

In another embodiment, when each of the pitches of the mirrors 122 and of the slits 126 in the row direction is equal to the pitch of the retroreflective units in the row direction, the width W1 of each mirror need not be equal to the width W2 of each slit (W1 ≠ W2). For example, the relative amount of reflected light may be increased when W1 > W2, whereas the relative amount of transmitted light may be increased when W1 < W2. W1 and W2 may be set in accordance with the optical characteristics of the display device. The width of each decorative layer 124 in the row direction may be equal to, or slightly smaller than, the width W1 of each mirror 122.

FIG. 3B is a schematic diagram illustrating states of reflection and transmission by the slit mirror 120. As illustrated in FIG. 3B, light L1 from the display 110 is incident on the slit mirror 120, and the incident light L1 is separated into reflection and transmission. The incident light L1 becomes light L2 reflected toward the retroreflective member 130 by the mirror 122, and the light L2 is reflected by the retroreflective member 130 back in the same direction from which the incident light comes from. Retroreflected light L3 is light reflected back in the same direction from which the incident light L2 comes from. However, an offset T occurs between the incident light L2 and the reflected light L3. Accordingly, the retroreflected light L3 is transmitted through the slit 126 of the slit mirror 120 and forms the aerial image P.

Since the decorative layer 124 is formed on the upper surface of the mirror 122, external light L4 is reflected outward by the reflective surface, which is the upper surface of the mirror 122, after passing through the transparent base 128 and the decorative layer 124. In this way, the brightness of the design of the decorative layer 124 can be enhanced by the external light L4. The light L3 retroreflected by the retroreflective member 130 is not transmitted through the decorative layer 124, and is thus used to form the aerial image P without loss at the decorative layer 124.

As described above, according to the embodiments, by disposing the decorative layer on the upper surface of the mirror in the slit mirror structure, the mirror can be provided internally while the design appears externally, enabling a stealth decorative aerial interface with minimal optical loss.

The display device of the embodiments has the following effects.
- In the structure in the related art, about 50 to 80% of light is lost because the retroreflected light passes through the decorative layer. However, in the embodiments, the decorative layer is provided on the upper surface of the mirror so that the retroreflected light does not pass through the decorative layer. Thus, no light is lost by the decorative layer. As a result, the aerial image can be prevented from becoming dark.
- Since the upper surface of the mirror formed of a metal layer is decorated, external light can enhance the brightness of the decoration for the aerial image.
- A decorative mirror for an aerial image can be realized that exhibits no chromatic dispersion (color variation depending on viewing angle) when a display is used, and that provides high design quality for both the image and the background.

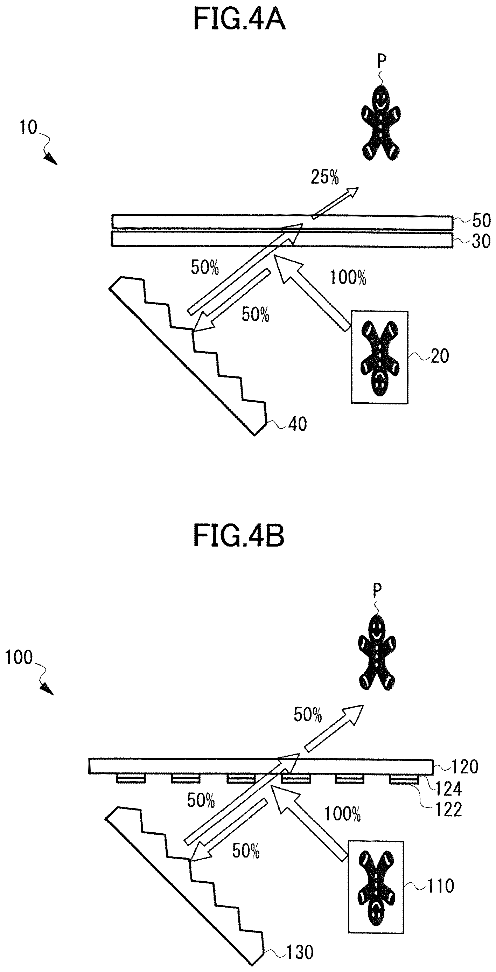

FIG. 4A is a diagram illustrating an example of optical efficiency when a decorative layer of the structure in the related art is used, and FIG. 4B is a diagram illustrating an example of optical efficiency when the slit mirror 120 including a decorative layer according to the embodiments is used. In the structure in the related art illustrated in FIG. 4A, assuming that the transmittance and reflectance of the half mirror 30 are both 50%, the light emitted from the display 20 is separated into 50% reflected light and 50% transmitted light by the half mirror 30. The 50% reflected light is retroreflected by the retroreflective member 40, and the retroreflected light is transmitted through the half mirror 30. As a result, 25% of the light contributes to forming the aerial image P.

In contrast, in the display device 100 of the embodiment illustrated in FIG. 4B, the light emitted from the display 110 is separated into reflected light and transmitted light by the slit mirror 120. 50% of the reflected light is retroreflected by the retroreflective member 130, and the retroreflected light is transmitted through the slits 126 and the transparent base 128 of the slit mirror 120. At this time, since optical loss as with a half mirror does not occur, 50% of the light contributes to forming the aerial image P. Accordingly, by employing the slit mirror 120, the optical efficiency can be significantly improved over the related art, and, as a result, the aerial image P can be displayed with high brightness.

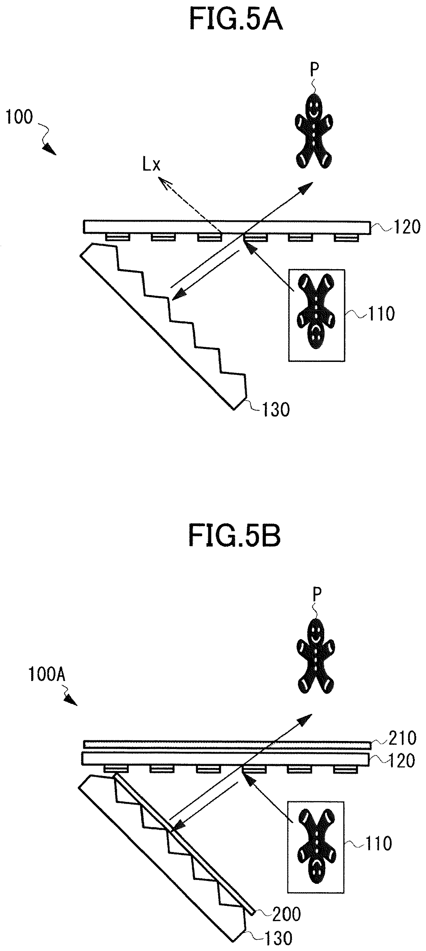

Next, another embodiment will be described. FIG. 5B is a schematic diagram illustrating a configuration of a display device according to another embodiment, and components identical to those illustrated in FIG. 2A are denoted by the same reference signs.

As illustrated in FIG. 5A, when the slit mirror 120 is employed, a portion of the light emitted from the display 110 becomes light Lx transmitted through the slits 126 of the slit mirror 120. The light Lx does not contribute to forming the aerial image, and if it becomes noticeable as internal stray light, there is a concern that the problem of internal stray light, which had been suppressed by using the polarizing beam splitter, may re-emerge.

Therefore, in the embodiment, an absorptive polarizing plate 210 is provided above the slit mirror 120 so as to absorb the light (which is polarized in the case of a typical LCD) emitted from the display 110 serving as a light source. This blocks light from the display 110 and internal stray light, thereby making the display less visible from the outside. At the same time, since it is necessary to transmit the light that forms an aerial image P, a quarter-wave plate 200 is disposed above a retroreflective member 130 to change the polarization direction of the light that forms the aerial image P. Accordingly, the aerial image P can be formed without optical loss. By combining the slit mirror 120 and the absorptive polarizing plate 210, a function equivalent to that of a polarizing reflective plate in an aerial-image display device can be realized.

The quarter-wave plate 200 is, for example, a retardation film attached to the top surface of the retroreflective member 130. For example, when linearly polarized light vibrating in a certain direction is incident on the quarter-wave plate 200, the quarter-wave plate emits light that has been converted into circularly polarized light. Conversely, when circularly polarized light is incident on the quarter-wave plate 200, the quarter-wave plate 200 emits light that has been converted into linearly polarized light.

The polarizing plate 210 is an absorptive polarizing plate that selectively transmits a component of linearly polarized light vibrating in a certain direction and absorbs a component of the linearly polarized light orthogonal to the component of the linearly polarized light vibrating in a certain direction. Therefore, the light emitted from the polarizing plate 210 includes only the polarized component that has been transmitted through the polarizing plate 210 without being absorbed. The absorptive polarizing plate is, for example, a polarizing film attached to the top surface of the slit mirror 120. The direction of the linearly polarized light absorbed by the polarizing plate 210 substantially coincides with the direction of the linearly polarized light emitted from the display 110.

FIG. 5B is a diagram for explaining the operation of a display device 100A. The light emitted from the display 110 is separated into reflected light and transmitted light by the slit mirror 120. The light that has been transmitted through the slit mirror 120 is mostly absorbed by the absorptive polarizing plate 210. In contrast, the light reflected by the slit mirror 120 travels toward the retroreflective member 130, passes through the quarter-wave plate 200 twice, and travels back toward the slit mirror 120. The retroreflected light is given a phase difference of a half wave by the quarter-wave plate 200, that is, the polarization direction is rotated by 90 degrees. Accordingly, the retroreflected light passes through the absorptive polarizing plate 210 via the slits 126 of the slit mirror 120 and forms the aerial image P.

As described above, according to the embodiments, the original image and the internal scattering in the display 110 can be made less visible by employing the absorptive polarizing plate and the quarter-wave plate. As a result, the visibility of the aerial image P can be improved. Moreover, by combining the quarter-wave plate, the slit mirror, and the absorptive polarizing plate, the function of a polarizing beam splitter (reflective polarizing plate) can be obtained. Furthermore, since reflective polarizing plates are expensive, the cost of the display device can be reduced. Further, since reflective polarizing plates have low durability against high temperature and high humidity, the display device can be easily mounted on vehicles that are exposed to high-temperature environments.

According to the disclosure, by disposing the decorative layer on the first reflective surface of each of the reflective members opposite to the second reflective surface of each of the reflective members, the light retroreflected by the retroreflective member is not transmitted through the decorative layer, and loss of the light contributing to forming the aerial image is suppressed so that the aerial image with high brightness can be displayed. At the same time, by reflecting the external light with the decorative layer, external design can be improved.

Although the embodiments of the invention have been described in detail above, the invention is not limited to the specific embodiments, and various modifications can be made within the scope of the claims.

## Claims

1. A display device configured to be capable of displaying an aerial image by using retroreflection, the display device comprising:
a light source;
a retroreflective member; and
an optical element disposed at a position where light from the light source is incident, wherein
the optical element includes:
a plurality of reflective members formed using a plurality of slits; and
a decorative layer disposed on a first reflective surface of each of the plurality of the reflective members, the first reflective surface being opposite to a second reflective surface of each of the plurality of the reflective members,
the second reflective surface of each of the plurality of the reflective members is configured to reflect the light from the light source toward the retroreflective member,
the first reflective surface is configured to reflect external light incident via the decorative layer, and
the plurality of the slits are configured to transmit light retroreflected by the retroreflective member to form the aerial image.

2. The display device according to claim 1, wherein
the optical element further includes a transparent base, and
each of the plurality of the reflective members is formed at a surface of the transparent base via the decorative layer.

3. The display device according to claim 1 or 2, wherein
a region formed by each of the plurality of the reflective members and the decorative layer disposed on each of the plurality of the reflective members is a region extending in a column direction of arrangement of the plurality of the reflective members, and
each of the plurality of the slits is formed between adjacent reflective members of the plurality of the reflective members.

4. The display device according to one of claim 1 to 3, wherein
the retroreflective member includes a plurality of symmetry axes with respect to which reflected light travels in a direction symmetric to incident light, and
the retroreflective member is disposed such that one of the plurality of the symmetry axes becomes parallel to a slit direction of the optical element.

5. The display device according to one of claim 1 to 4, wherein
when the retroreflective member is projected onto the optical element, a pitch of retroreflective units in a row direction of arrangement of the retroreflective units is equal to each of a pitch of the plurality of the reflective members and a pitch of the plurality of the slits in a row direction of arrangement of the plurality of the reflective members and the plurality of the slits, the retroreflective units being disposed in a matrix pattern of the retroreflective member.

6. The display device according to one of claim 1 to 5, further comprising:
a quarter-wave plate disposed above the retroreflective member; and
an absorptive polarizing plate disposed above the optical element, wherein
the absorptive polarizing plate is configured to absorb a polarized component of the light emitted from the light source and to transmit a polarized component of light retroreflected by the quarter-wave plate.

7. An optical element configured to form an aerial image by using retroreflection, the optical element comprising:
a transparent base;
a plurality of reflective members formed at a surface of the transparent base by using a plurality of slits; and
a decorative layer formed between the surface of the transparent base and the plurality of the reflective members.
